# FASCICULE DE BREVET EUROPEEN

(11) **EP 3 366 932 B1**
(45) Date de publication et mention de la délivrance du brevet: **27.10.2021**
(21) Numéro de dépôt: 18157053.2
(22) Date de dépôt: 16.02.2018
(51) Int. Cl.: F16B 19/00, F16B 19/10, F16B 33/00, F16B 37/06

(54) **INSERT À SERTIR, ÉLÉMENT ET ENSEMBLE DE FIXATION COMPRENANT UN TEL INSERT ET PROCÉDÉS DE FABRICATION DE TELLES PIÈCES**
EINSATZ ZUM CRIMPEN, BEFESTIGUNGSELEMENT UND -EINHEIT, DIE EINEN SOLCHEN EINSATZ UMFASSEN, UND HERSTELLUNGSVERFAHREN VON SOLCHEN TEILEN
CRIMPING INSERT, ATTACHMENT ELEMENT AND ASSEMBLY COMPRISING SUCH AN INSERT AND METHODS FOR MANUFACTURING SUCH PARTS

(30) Priorité: 22.02.2017 FR 1751385
(43) Date de publication de la demande: 29.08.2018
(73) Titulaire: Bollhoff Otalu, 73490 La Ravoire (FR)
(72) Inventeur: Perroud, Norbert, 73190 Curienne (FR); Bégel, Nicolas, 73000 Chambéry (FR)
(74) Mandataire: Talbot, Alexandre

(56) Documents cités:
- EP-A1- 1 953 398
- EP-A1- 3 394 455
- EP-A2- 1 557 577
- DE-A1- 2 700 665
- US-A1- 2005 019 129
- US-B1- 6 283 691

## Description

### Domaine technique de l'invention

L'invention concerne les inserts à sertir sur un support, et plus particulièrement l'étanchéité entre un insert et un support.

### État de la technique

Actuellement, on utilise des inserts à sertir sur un support et des joints adaptés aux inserts pour assurer l'étanchéité entre l'insert et le support.

Par exemple, on peut citer des inserts ayant un fût, une collerette, nommée également tête d'appui, et un joint surmoulé sur l'insert. Un tel joint est déposé autour du fût et sous la tête de l'insert, et il est solidaire de l'insert. Cependant, le joint est sensible et peut être endommagé lors de l'introduction de l'insert dans son logement de destination. En outre, un tel joint peut se désolidariser lors du montage de l'insert sur un support. En effet, le montage des inserts peut générer des vibrations et frottements qui ont tendance à faire bouger le joint entraînant une perte de l'étanchéité recherchée. Ce phénomène est encore amplifié lorsque les inserts sont lubrifiés pour les besoins de l'automobile, ou lorsque les inserts sont soumis, après leur installation, à des traitements de surface en bain à haute température, ou à l'application d'une peinture ou vernis.

On peut citer également d'autres inserts à sertir qui ont une collerette et un joint torique placé sous la collerette et autour du fût de l'insert. On peut en outre citer des inserts qui ont une collerette munie d'une gorge située sous la tête afin de loger un joint, comme par exemple l'écrou à riveter en aveugle décrit dans la demande de brevet européen EP1557577. Mais ces inserts ne procurent pas une tenue mécanique suffisante au support. En effet, l'insert serti sur le support exerce une pression sur le joint, qui se déforme du fait de son élasticité, mais qui, par un effet ressort, transmet des forces normales à la surface du support qui ont tendance à décoller légèrement la collerette vis-à-vis de la surface du support. Du fait des vibrations rencontrées lors de l'utilisation de l'insert serti au support, un décollement intempestif de l'insert peut apparaître, caractérisé mécaniquement par une perte de tension dans l'assemblage.

Le document US 6,283,691 divulgue un écrou d'étanchéité dans lequel la tête comporte une rainure recevant un joint d'étanchéité qui prend appui contre un support. La rainure présente une section pyramidale ou en parallélogramme.

### Objet de l'invention

Un objet de l'invention consiste à pallier ces inconvénients, et plus particulièrement à fournir des moyens particulièrement adaptés pour obtenir une tenue mécanique efficace entre un insert et un support.

Un autre objet de l'invention est de fournir des moyens pour garantir une étanchéité efficace entre l'insert et le support.

L'invention est définie dans les revendications 1-8.

Selon un aspect de l'invention, il est proposé un insert à sertir sur un support, comprenant un corps ayant :
- un fût s'étendant le long d'un axe longitudinal et comportant un tronçon de sertissage configuré pour se déformer en un bourrelet de sertissage pour sertir l'insert sur le support, et
- une collerette présentant une surface orientée vers le tronçon de sertissage et s'étendant le long d'un axe perpendiculaire à l'axe longitudinal.

La collerette a une épaisseur constante et présente un pli formant une gorge située sur la surface et destinée à recevoir un joint d'étanchéité.

Ainsi on garantit un contact entre la collerette et le support pour assurer une tenue mécanique efficace de l'insert au support. On fournit en outre un insert adapté pour loger un joint d'étanchéité qui garantit le contact de la collerette avec le support.

La surface a une première partie sur laquelle la gorge est située et une deuxième partie située à une extrémité de la collerette opposée au fût, la deuxième partie étant située en avant de la première partie par rapport à l'orientation de la surface.

L'épaisseur de la collerette peut être supérieure ou égale à 0,5 mm et strictement inférieure à 2 mm.

Selon un autre aspect de l'invention, il est proposé un élément de fixation, comprenant un insert, tel que défini ci-avant, et un joint d'étanchéité logé au sein de la gorge de l'insert.

Selon encore un autre aspect de l'invention, il est proposé un ensemble de fixation, comprenant un élément de fixation, tel que défini ci-avant, et un support sur lequel l'élément de fixation est serti.

Le support peut avoir une épaisseur comprise entre 0,5 et 8 mm incluses.

Selon d'autres aspects de l'invention, il est proposé des procédés de fabrication des pièces telles que définies ci-avant.

Il est donc proposé un procédé de fabrication d'un insert à sertir sur un support, comprenant une étape dans laquelle on fournit un insert comportant un corps ayant :
- un fût s'étendant le long d'un axe longitudinal et comportant un tronçon de sertissage configuré pour se déformer en un bourrelet de sertissage pour sertir l'insert sur le support, et
- une collerette présentant une surface orientée vers le tronçon de sertissage et s'étendant le long d'un axe perpendiculaire à l'axe longitudinal.

Le procédé comporte une étape de pliage de la collerette de manière à conserver une épaisseur de la collerette constante et à former une gorge située sur la surface.

Il est également proposé un procédé de fabrication d'un élément de fixation, comprenant une fabrication d'un insert telle que définie ci-avant, et une étape de logement d'un joint d'étanchéité au sein de la gorge de l'insert.

Il est aussi proposé un procédé de fabrication d'un ensemble de fixation, comprenant une fabrication d'un élément de fixation telle que définie ci-avant et une étape de sertissage de l'élément de fixation sur un support.

### Description sommaire des dessins

D'autres avantages et caractéristiques ressortiront plus clairement de la description qui va suivre de modes particuliers de réalisation et de mise en œuvre de l'invention donnés à titre d'exemples non limitatifs et représentés aux dessins annexés, dans lesquels :
- la figure 1, illustre schématiquement une vue en coupe d'un mode de réalisation d'un insert à sertir selon l'invention avant sertissage ; et
- la figure 2, illustre schématiquement une vue en coupe de l'insert de la figure 1 serti sur un support.

### Description détaillée

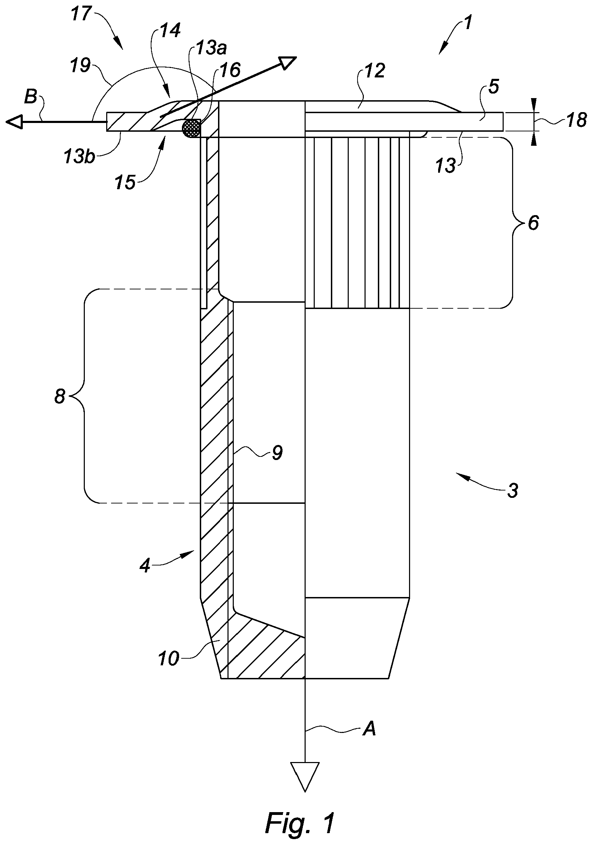

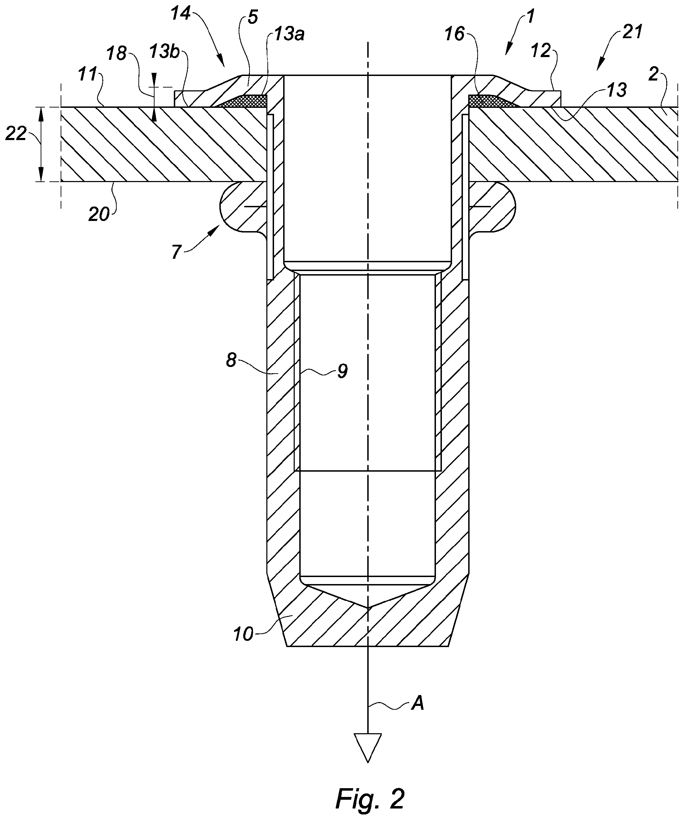

Sur les figures 1 et 2, on a représenté un insert 1 à sertir sur un support 2. Le support 2 peut être en métal ou en matériau composite. De préférence, l'insert 1 et le support 2 sont en métal, par exemple en acier.

L'insert 1 peut être un écrou, un rivet, une vis ou goujon, ou une entretoise. Un écrou est une pièce creuse taraudée, c'est-à-dire qui comporte un filetage interne, destinée à recevoir une autre pièce filetée. Un rivet est un élément d'assemblage de pièces plates, renflé à une extrémité et dont on écrase l'autre extrémité. Une vis ou goujon est une pièce filetée, c'est-à-dire qui comporte un filetage externe. Une entretoise est une pièce de liaison destinée à être placée transversalement entre le support 2 et une pièce secondaire. Une entretoise permet, notamment, de maintenir un écartement constant entre le support 2 et la pièce secondaire. L'entretoise peut également comporter un tronçon taraudé muni d'un filetage interne.

L'insert 1 comporte un corps 3 ayant un fût 4 et une collerette 5. Par exemple, le corps 3 est monobloc. Le fût 4 s'étend le long d'un axe longitudinal A et comporte un tronçon de sertissage 6 configuré pour se déformer en un bourrelet de sertissage 7, illustré sur la figure 2. Le bourrelet de sertissage 7 permet de sertir l'insert 1 sur le support 2. Le fût 4 a une forme globalement cylindrique. On entend ici par cylindre, un solide limité par une surface cylindrique engendrée par une droite, notée génératrice, parcourant une courbe plane fermée, notée directrice, et deux plans coupant les génératrices. La surface cylindrique du fût 4 peut présenter une ou plusieurs faces, de manière à avoir une section dont le bord externe est polygonal, par exemple hexagonal ou carré. La surface cylindrique du fût 4 peut avoir une section dont le bord externe est oblong, par exemple elliptique. De préférence le corps 3 a une forme d'un cylindre creux délimitant un orifice 7 traversant ou borgne à une extrémité distale du fût 4. Le fût 4 peut en outre comporter un tronçon taraudé 8 adjacent au tronçon de sertissage 6. Le tronçon taraudé 8 comporte un filetage interne 9 destiné à recevoir une pièce filetée à viser sur l'insert 1. L'insert 1 comporte ainsi, dans l'ordre suivant une direction de l'axe longitudinal A, la collerette 5, le tronçon de sertissage 6, le tronçon taraudé 8 et une extrémité distale 10 du fût 4.

La collerette 5 est destinée à venir au contact d'une surface de réception 11 du support 2 lorsque l'insert 1 est serti au support 2. La collerette 5 s'étend le long d'un axe transversal B. L'axe transversal B est perpendiculaire à l'axe longitudinal A. En outre, la collerette 5 présente une surface proximale 12 et une surface distale 13 opposée à la surface proximale 12. La surface proximale 12 est orientée selon une direction opposée à la direction de l'axe longitudinal A du fût 4. A l'inverse, la surface distale 13 est orientée selon la direction de l'axe longitudinal A. En d'autres termes, la surface distale 13 est orientée vers le tronçon de sertissage 6. Par ailleurs, la collerette 5 présente un pli 14 formant une gorge 15 située sur la surface distale 13. La gorge 15 est destinée à recevoir un joint d'étanchéité 16. Le joint 16 assure une étanchéité d'un ensemble de fixation comprenant le support 2, l'insert 1 et le joint d'étanchéité 16. En particulier, le joint 16 assure une étanchéité aux fluides, tels que l'eau, l'huile, le glycol, et plus généralement aux gaz, comme l'air. Le joint 16 est destiné à s'interposer entre la surface de réception 11 du support 2 et la surface distale 13. Par exemple, le joint 16 est réalisé dans un matériau différent de celui de l'insert 1. De façon générale, le joint 16 est réalisé dans un matériau déformable, par exemple en plastique ou en matériau élastomère, par exemple les caoutchoucs naturels ou synthétiques. Le joint 16 a une forme généralement torique. Le joint d'étanchéité 16 peut être monté sur l'insert 1 pour former un élément de fixation 17.

En outre, le pli 14 de la collerette 5 permet à la collerette 5 d'être au contact de la surface de réception 11 du support 2 lorsque l'insert 1 est serti au support 2. Plus particulièrement, la surface distale 13 comporte une première partie 13a sur laquelle la gorge 15 est située, et une deuxième partie 13b située à une extrémité de la collerette 5 opposée au fût 4. La collerette 5 comporte une autre extrémité opposée en contact avec le fût 4. La gorge 15 est située entre le fût 4 et la deuxième partie 13b de la surface distale 13. Ainsi, lorsque l'insert 1 est serti sur le support 2, comme illustré à la figure 2, le pli 14 permet de maintenir un contact de la collerette 5 avec la surface de réception 11 du support 2. Un tel contact permet de maintenir une pression constante dans le temps et favorise la tenue mécanique de l'insert 1 sur le support 2. En outre, la gorge 15 permet de loger le joint 16 tout en maintenant le contact entre les deux surfaces en regard 13b, 11 et évite le phénomène de soulèvement de la collerette 5 du à l'effet ressort du joint 16 lorsque ce dernier est comprimé lors du sertissage. Ainsi on améliore la tenue mécanique de l'insert 1 tout en garantissant une étanchéité efficace.

Plus particulièrement, la collerette 5 a une épaisseur 18 constante. Ainsi, la gorge 15 peut être réalisée par pliage de la collerette 5. Le pliage forme également le pli 14. En d'autres termes on déforme la collerette 5 pour former le pli 14 selon un angle 19 déterminé par rapport à l'axe transversal B. Le pliage peut être réalisé en comprimant la collerette 5 selon l'axe transversal B. On peut également utiliser une matrice placée en regard de la surface distale pour favoriser la formation de la gorge 15 lors du pliage. Grâce au pliage, on peut réaliser la gorge 15 sans utiliser une étape particulière de frappe de la collerette 5. On entend par épaisseur constante de la collerette 5, une épaisseur dont la valeur est maintenue selon l'axe transversal B. C'est-à-dire qu'une première partie de collerette 5 joignant le fût 4 au pli 14 a la même épaisseur qu'une deuxième partie de collerette 5 joignant le pli 14 à l'extrémité de la collerette 5 opposée au fût 4. Avantageusement, ou peut créer, lors du pliage et à l'aide d'une matrice adaptée, des plis radiaux situés sur la surface distale 13 s'étendant du fût 4 à l'extrémité opposée de la collerette 5. Ces plis radiaux permettent de rigidifier la collerette 5 tout en conservant une épaisseur constante selon l'axe transversal B. Un tel pliage est particulièrement adapté lorsque la collerette 5 a une épaisseur faible. On entend par épaisseur faible, une épaisseur 18 supérieure ou égale à 0,5 mm et strictement inférieure à 2 mm. De préférence, l'épaisseur 18 est strictement inférieure à 1,5 mm. En effet, lors d'une formation d'une gorge par frappe sur une collerette ayant une épaisseur faible, l'outil de frappe peut casser car il n'est pas adapté aux faibles épaisseurs. En effet, les contraintes engendrées par l'outil de frappe destiné aux fortes épaisseurs peuvent être supérieures à la résistance à la rupture de l'outil car l'épaisseur de la collerette est faible et n'absorbe pas suffisamment l'énergie engendrée par de telles contraintes.

L'insert 1 est à sertir, c'est-à-dire qu'il est monté sur le support 2 par une opération de sertissage. Le sertissage consiste à déformer l'insert 1, par traction ou par appui, par exemple sous presse, à l'extrémité distale du fût 4, pour former le bourrelet de sertissage 7 qui vient au contact du support 2 afin de coincer le support 2 entre la collerette 5 de l'insert 1 et le bourrelet de sertissage 7, ce qui permet de fixer l'insert 1 au support 2. Plus particulièrement, le bourrelet de sertissage 7 vient au contact d'une surface 20 du support 2 opposée à la surface de réception 11.

Sur la figure 2, on a également représenté un ensemble de fixation 21 comprenant le support 2 et l'élément de fixation 17 serti sur le support 2. En particulier, un orifice est préalablement formé au sein du support 2 pour introduire l'insert 1 à sertir. Le support 2 a une épaisseur 22 comprise entre 0,5 et 8 mm incluses.

En outre, il est proposé des procédés de fabrication de l'insert 1, de l'élément de fixation 17 et de l'ensemble de fixation 21 tels que définis ci-avant. Le procédé de fabrication de l'insert 1 à sertir sur le support 2 comporte une étape dans laquelle on fournit un insert comportant un corps ayant :
- un fût s'étendant le long d'un axe longitudinal et comportant un tronçon de sertissage configuré pour se déformer en un bourrelet de sertissage pour sertir l'insert sur le support, et
- une collerette présentant une surface orientée vers le tronçon de sertissage et s'étendant le long d'un axe perpendiculaire à l'axe longitudinal.

Le procédé comporte, en outre, une étape de pliage de la collerette de manière à conserver une épaisseur de la collerette constante et à former une gorge située sur la surface.

Le procédé de fabrication de l'élément de fixation 17, comprend une étape de logement d'un joint d'étanchéité 16 au sein de la gorge 15 de l'insert 1.

Le procédé de fabrication de l'ensemble de fixation 21, comprend une étape de sertissage de l'élément de fixation 21 sur le support 2.

Les éléments et leurs procédés de fabrication qui viennent d'être décrits sont particulièrement adaptés pour l'industrie automobile, navale ou aéronautique...

## Revendications

1. Insert à sertir sur un support (2), comprenant un corps (3) ayant :
- un fût (4) s'étendant le long d'un axe longitudinal (A) et comportant un tronçon de sertissage (6) configuré pour se déformer en un bourrelet de sertissage (7) pour sertir l'insert sur le support (2), et
- une collerette (5) s'étendant le long d'un axe (B) perpendiculaire à l'axe longitudinal (A), la collerette (5) possédant une première surface (13) destinée à venir en contact du support (2) et une deuxième surface (12) opposée à la première surface (13) selon l'axe longitudinal (A), la collerette (5) possédant une première partie plus éloignée du tronçon de sertissage (6) qu'une deuxième partie selon l'axe longitudinal (A),
- une gorge (15) destinée à recevoir un joint d'étanchéité (16) destiné à être placé entre le support (2) et la collerette (5),
la collerette (5) comporte successivement, le long de l'axe (B) perpendiculaire à l'axe longitudinal (A) et à partir du fût (4), la première partie, une zone de déformation (14) et la deuxième partie, **caractérisé en ce que** la gorge (15) est délimitée par le fût (4), la première partie et la zone de déformation (14), et **en ce que** la collerette (5) a une épaisseur (18) constante dont la valeur est maintenue selon l'axe transversal (B).

2. Insert selon la revendication 1, dans lequel l'épaisseur (18) de la collerette (5) est supérieure ou égale à 0,5 mm et strictement inférieure à 2 mm.

3. Elément de fixation, comprenant un insert selon l'une des revendications 1 et 2, et un joint d'étanchéité (16) logé au sein de la gorge (15) de l'insert.

4. Ensemble de fixation, comprenant un élément de fixation selon la revendication 3 et un support (2) sur lequel l'élément de fixation est serti.

5. Ensemble de fixation selon la revendication 4, dans lequel le support (2) a une épaisseur (22) comprise entre 0,5 et 8 mm incluses.

6. Procédé de fabrication d'un insert à sertir sur un support (2), comprenant une étape dans laquelle on fournit un insert (1) comportant un corps (3) ayant :
- un fût (4) s'étendant le long d'un axe longitudinal (A) et comportant un tronçon de sertissage (6) configuré pour se déformer en un bourrelet de sertissage (7) pour sertir l'insert (1) sur le support (2), et
- une collerette (5) s'étendant le long d'un axe (B) perpendiculaire à l'axe longitudinal (A), la collerette possédant une première surface (13) destinée à venir en contact du support (2) et une deuxième surface (12) opposée à la première surface (13) selon l'axe longitudinal (A), la collerette (5) possédant une première partie plus éloignée du tronçon de sertissage (6) qu'une deuxième partie selon l'axe longitudinal (A),
**caractérisé en ce qu'**il comporte une étape de pliage de la collerette (5) de manière à former une gorge (15) destinée à recevoir un joint d'étanchéité destinée à être placé entre le support (2) et la collerette (5), la collerette (5) comporte successivement, le long de l'axe (B) perpendiculaire à l'axe longitudinal (A) et à partir du fût (4), une première partie, une zone de déformation (14) et une deuxième partie, **en ce que** la gorge (15) est délimitée par le fût (4), la première partie et la zone de déformation (14) et **en ce que** l'étape de pliage est configurée pour conserver une épaisseur (18) de la collerette (5) constante, dont la valeur est maintenue selon l'axe transversal (B).

7. Procédé de fabrication d'un élément de fixation (17), comprenant une fabrication d'un insert (1) selon la revendication 6, et une étape de logement d'un joint d'étanchéité (16) au sein de la gorge (15) de l'insert (1).

8. Procédé de fabrication d'un ensemble de fixation (21), comprenant une fabrication d'un élément de fixation (17) selon la revendication 7 et une étape de sertissage de l'élément de fixation (17) sur un support (2).

## Patentansprüche

1. Einsatz, der auf einen Träger (2) zu verpressen ist, umfassend einen Körper (3), der aufweist:
- einen Schaft (4), der sich entlang einer Längsachse (A) erstreckt und einen Pressabschnitt (6) aufweist, der konfiguriert ist, um sich in einen Presswulst (7) zu verformen, um den Einsatz auf dem Träger (2) zu verpressen, und
- einen Kragen (5), der sich entlang einer Achse (B) senkrecht zur Längsachse (A) erstreckt, wobei der Kragen (5) eine erste Fläche (13), die dazu bestimmt ist, mit dem Träger (2) in Kontakt kommen, und eine zweite Fläche (12) aufweist, die der ersten Fläche (13) entlang der Längsachse (A) gegenüberliegt, wobei der Kragen (5) einen ersten Teil aufweist, der von dem Pressabschnitt (6) weiter entfernt ist als ein zweiter Teil entlang der Längsachse (A),
- eine Nut (15), die dazu bestimmt ist, eine Dichtung (16) aufzunehmen, die dazu bestimmt ist, zwischen dem Träger (2) und dem Kragen (5) angeordnet zu werden,
und der Kragen (5) nacheinander entlang der Achse (B) senkrecht zur Längsachse (A) und ausgehend vom Schaft (4) den ersten Teil, einen Verformungsbereich (14) und den zweiten Teil aufweist, **dadurch gekennzeichnet, dass** die Nut (15) durch den Schaft (4), den ersten Teil und den Verformungsbereich (14) begrenzt ist, und der Kragen (5) eine konstante Dicke (18) aufweist, deren Wert entlang der Querachse (B) beibehalten wird.

2. Einsatz nach Anspruch 1, wobei die Dicke (18) des Kragens (5) größer oder gleich 0,5 mm und strikt kleiner als 2 mm ist.

3. Befestigungselement, umfassend einen Einsatz nach einem der Ansprüche 1 und 2 und eine Dichtung (16), die innerhalb der Nut (15) des Einsatzes angeordnet ist.

4. Befestigungsanordnung, umfassend ein Befestigungselement nach Anspruch 3 und einen Träger (2), auf dem das Befestigungselement aufgepresst ist.

5. Befestigungsanordnung nach Anspruch 4, wobei der Träger (2) eine Dicke (22) aufweist, die zwischen einschließlich 0,5 und 8 mm beträgt.

6. Verfahren zur Herstellung eines Einsatzes, der auf einen Träger (2) zu verpressen ist, umfassend einen Schritt, bei dem ein Einsatz (1) bereitgestellt wird, umfassend einen Körper (3), der aufweist:
- einen Schaft (4), der sich entlang einer Längsachse (A) erstreckt und einen Pressabschnitt (6) aufweist, der konfiguriert ist, um sich in einen Presswulst (7) zu verformen, um den Einsatz (1) auf dem Träger (2) zu verpressen, und
- einen Kragen (5), der sich entlang einer Achse (B) senkrecht zur Längsachse (A) erstreckt, wobei der Kragen eine erste Fläche (13), die dazu bestimmt ist, mit dem Träger (2) in Kontakt kommen, und eine zweite Fläche (12) aufweist, die der ersten Fläche (13) entlang der Längsachse (A) gegenüberliegt, wobei der Kragen einen ersten Teil aufweist, der von dem Pressabschnitt (6) weiter entfernt ist als ein zweiter Teil entlang der Längsachse (A),
**dadurch gekennzeichnet, dass** es einen Schritt des Biegens des Kragens (5) derart aufweist, um eine Nut (15) zu bilden, die dazu bestimmt ist, eine Dichtung aufzunehmen, die dazu bestimmt ist, zwischen dem Träger (2) und dem Kragen (5) angeordnet zu werden, und der Kragen (5) nacheinander entlang der Achse (B) senkrecht zur Längsachse (A) und ausgehend vom Schaft (4) einen ersten Teil, einen Verformungsbereich (14) und einen zweiten Teil aufweist, wobei die Nut (15) durch den Schaft (4), den ersten Teil und den Verformungsbereich (14) begrenzt ist und der Schritt des Biegens konfiguriert ist, um eine konstante Dicke (18) des Kragens (5) sicherzustellen, deren Wert entlang der Querachse (B) beibehalten wird.

7. Verfahren zur Herstellung eines Befestigungselements (17), umfassend ein Herstellen eines Einsatzes (1) nach Anspruch 6 und einen Schritt des Unterbringens einer Dichtung (16) innerhalb der Nut (15) des Einsatzes (1).

8. Verfahren zur Herstellung einer Befestigungsanordnung (21), umfassend die Herstellung eines Befestigungselements (17) nach Anspruch 7 und einen Schritt des Aufpressens des Befestigungselements (17) auf einem Träger (2).

## Claims

1. Insert to be crimped on a support (2), comprising a body (3) having:
- a shank (4) extending along a longitudinal axis (A) and comprising a crimping section (6) configured to deform into a crimping bead (7) to crimp the insert on the support (2), and
- a flange (5) extending along an axis (B) perpendicular to the longitudinal axis (A), the flange (5) having a first surface (13) designed for contacting the support (2) and a second surface (12) opposite the first surface (13) along the longitudinal axis (A), the flange (5) having a first portion further from the crimping section (6) than a second portion along the longitudinal axis (A),
- a groove (15) designed for receiving a seal (16) designed to be placed between the support (2) and the flange (5),
the flange (5) comprises successively, along the axis (B) perpendicular to the longitudinal axis (A) and starting from the shank (4), the first part, a deformation zone (14) and the second part, **characterized in that** the groove (15) is delimited by the shank (4), the first part and the deformation zone (14), and **in that** the flange (5) has a constant thickness (18), the value of which is maintained along the transverse axis (B).

2. Insert according to claim 1, wherein the thickness (18) of the flange (5) is greater than or equal to 0.5 mm and strictly less than 2 mm.

3. Fixing part, comprising an insert according to one of claims 1 and 2, and a seal (16) housed in the groove (15) of the insert.

4. Fixing assembly, comprising a fixing part according to claim 3 and a support (2) on which the fixing part is crimped.

5. Fixing assembly according to 4, wherein the support (2) has a thickness (22) comprised between 0.5 and 8 mm inclusive.

6. Manufacturing method of an insert to be crimped on a support (2), comprising a step in which an insert (1) is provided comprising a body (3) having:
- a shank (4) extending along a longitudinal axis (A) and comprising a crimping section (6) configured to deform into a crimping bead (7) to crimp the insert (1) on the support (2), and
- a flange (5) extending along an axis (B) perpendicular to the longitudinal axis (A), the flange having a first surface (13) designed for contacting the support (2) and a second surface (12) opposite the first surface (13) along the longitudinal axis (A), the flange (5) having a first portion further from the crimping section (6) than a second portion along the longitudinal axis (A),
**characterized in that** it comprises a folding step of the flange (5) so as to form a groove (15) designed to receive a seal designed to be placed between the support (2) and the flange (5), the flange (5) comprises successively, along the axis (B) perpendicular to the longitudinal axis (A) and starting from the shank (4), a first portion, a deformation zone (14) and a second portion **in that** the groove (15) is delimited by the shank (4), the first portion, the deformation zone (14) and **in that** the folding step is configured to maintain a constant thickness (18) of the flange (5), the value of which is maintained along the transverse axis (B)..

7. Manufacturing method of a fixing part (17), comprising manufacturing of an insert (1) according to claim 6 and a housing step of a seal (16) in the groove (15) of the insert (1).

8. Manufacturing method of a fixing assembly (21), comprising manufacturing of a fixing part (17) according to claim 7 and a crimping step of the fixing part (17) on a support (2).
